Europäisches Patentamt

European Patent Office

Office européen des brevets

(19)

(11) Veröffentlichungsnummer: **0 353 676**
**A2**

(12) **EUROPÄISCHE PATENTANMELDUNG**

(21) Anmeldenummer: **89114059.2**

(22) Anmeldetag: **29.07.89**

(51) Int. Cl.⁴: **C08L 33/06 , //(C08L33/06, 33:02)**

(30) Priorität: **01.08.88 DE 3826132**

(43) Veröffentlichungstag der Anmeldung:
**07.02.90 Patentblatt 90/06**

(84) Benannte Vertragsstaaten:
**DE FR GB IT NL**

(71) Anmelder: **BASF Aktiengesellschaft**
**Carl-Bosch-Strasse 38**
**D-6700 Ludwigshafen(DE)**

(72) Erfinder: **Aydin, Oral, Dr.**
**Sophienstrasse 14**
**D-6800 Mannheim 1(DE)**
Erfinder: **Wendel, Kurt, Dr.**
**Woehlerstrasse 26**
**D-6700 Ludwigshafen(DE)**
Erfinder: **Fuessl, Ruediger**
**Neubergstrasse 30**
**D-6730 Neustadt(DE)**
Erfinder: **Ley, Gregor, Dr.**
**In den Trankstuecken**
**D-6719 Wattenheim(DE)**

(54) **Wässrige Kunststoffzubereitungen.**

(57) Wäßrige Kunststoffzubereitungen, die

A) 30 bis 55 Gew.-% Kunststoffteilchen, die in Tetrahydrofuran einen K-Wert von 20 bis 100 aufweist und aus

a) 65 bis 92 Gew.-% eines Acrylsäure- oder Methacrylsäureesters eines $C_1$-$C_8$-Alkanols oder eines Gemisches dieser Monomeren (Monomere I)

b) 6 bis 15 Gew.-% einer 3 bis 5 C-Atome enthaltenden $\alpha,\beta$-monoethylenisch ungesättigten Monocarbonsäure, Dicarbonsäure und/oder eines Dicarbonsäureanhydrids (Monomere II)

c) 0 bis 20 Gew.-% Vinylacetat und/oder Vinylpropionat (Monomere III) und

d) 0 bis 3 Gew.-% sonstigen copolymerisierbaren Monomeren (Monomere IV)
aufgebaut sind,

B) 2 bis 10 Gew.-% eines Zinksalzes einer polymeren Polycarbonsäure, die in Tetrahydrofuran einen K-Wert von 2 bis 40 hat und aus

a) 20 bis 100 Gew.-% der Monomeren II,

b) 0 bis 80 Gew.-% Acrylnitril, Styrol, eines Acrylsäure- oder Methacrylsäureesters eines $C_1$-$C_8$-Alkanols oder eines Gemisches dieser Monomeren (Monomere V) und

c) 0 bis 3 Gew.-% der Monomeren IV aufgebaut ist, wobei das Salz pro Mol nicht veresterter Säurefunktionen 0,2 bis 0,5 mol $Zn^{2+}$ enthält,

C) 0,3 bis 6 Gew.-% Ammoniak,

D) wirksame Mengen eines Emulgators, und

E) als Restmenge Wasser enthalten.

## Wäßrige Kunststoffzubereitungen

Die vorliegende Erfindung betrifft wäßrige Kunstoffzubereitungen, im wesentlichen enthaltend

A) 25 bis 55 Gew.-% Kunststoffteilchen, die in Tetrahydrofuran einen K-Wert von 20 bis 100 aufweisen und aus

a) 65 bis 92 Gew.-% eines Acrylsäure- oder Methacrylsäureesters eines $C_1$-$C_8$-Alkanols oder eines Gemisches dieser Monomeren (Monomere I)

b) 6 bis 15 Gew.-% einer 3 bis 5 C-Atome enthaltenden $\alpha,\beta$-monoethylenisch ungesättigten Monocarbonsäure, Dicarbonsäure und/oder eines Dicarbonsäureanhydrids (Monomere II)

c) 0 bis 20 Gew.-% Vinylacetat und/oder Vinylpropionat (Monomere III) und

d) 0 bis 3 Gew.-% sonstigen copolymerisierbaren Monomeren (Monomere IV)

aufgebaut sind,

B) 2 bis 10 Gew.-% eines Zinksalzes einer polymeren Polycarbonsäure, die in Tetrahydrofuran einen K-Wert von 2 bis 40 hat und aus

a) 20 bis 100 Gew.-% der Monomeren II,

b) 0 bis 80 Gew.-% Acrylnitril, Styrol, eines Acrylsäure- oder Methacrylsäureesters eines $C_1$-$C_8$-Alkanols oder eines Gemisches dieser Monomeren (Monomere v) und

c) 0 bis 3 Gew.-% der Monomeren IV

aufgebaut ist, wobei das Salz pro Mol nicht veresterter Säurefunktionen 0,2 bis 0,5 mol $Zn^{2+}$ enthält,

C) 0,3 bis 6 Gew.-% Ammoniak,

D) wirksame Mengen eines Emulgators, und

E) als Restmenge Wasser.

Kunststoffzubereitungen auf der Basis wäßriger Kunststoffdispersionen, deren Polymere hauptsächlich Acryl- und/oder Methacrylsäureester einpolymersiert enthalten, sind allgemein bekannt und finden insbesondere als Klebstoffe Verwendung.

Unbefriedigend ist jedoch, daß sie Klebeverbindungen mit geringer Wasserbeständigkeit ergeben oder im nichtverfestigten Zustand nicht transparent sind, wodurch zahlreiche Klebearbeiten erschwert werden.

Die DE-A 34 06 321 und die ältere Anmeldung P 38 00 984.6 betreffen Bindemittel auf der Basis wäßriger, ammoniakalischer Lösungen von Zinksalzen polymerer Polycarbonsäuren und wäßriger Dispersionen von hauptsächlich aus Acrylsäure- und/oder Methacrylsäureestern aufgebauten Copolymerisaten, die nach den Beispielen 1 bis 3 Gew.-% Acrylsäure oder Methacrylsäure als Comonomere enthalten.

Diese Bindemittel weisen zwar im verfestigten Zustand eine erhöhte Wasserbeständigkeit auf, sind im nichtverfestigten Zustand aber ebenfalls nicht transparent.

Der vorliegenden Erfindung lagen daher als Klebemittel geeignete wäßrige Kunststoffzubereitungen mit erhöhter Wasserbeständigkeit als Aufgabe zugrunde, die im nichtverfestigten Zustand transparent sind.

Demgemäß wurden die eingangs definierten Kunststoffzubereitungen gefunden.

Die Komponente A enthält als Monomere I bevorzugt Acrylsäure- oder Methacrylsäureester einpolymerisiert, die sich von 1 bis 4 C-Atomen enthaltenden Alkanolen wie Methanol, Ethanol, iso-Propanol, n- und iso-Butanol ableiten. Von besonderem Interesse sind Methylacrylat, Ethylacrylat, n-Butylacrylat und Methylmethacrylat.

Als Monomeren II werden bevorzugt Acrylsäure, Methacrylsäure und Crotonsäure in die Kunststoffteilchen A eingebaut.

Der Gewichtsanteil der Monomeren II an A beträgt vorteilhaft 8 bis 15 Gew.-%. Bei einem Gewichtsanteil von weniger als 6 Gew.-% sind die Kunststoffzubereitungen nicht transparent und ein zu hoher Gewichtsanteil bewirkt eine wenig vorteilhafte Viskositätserhöhung und führt zusätzlich zu einer verstärkten Bindung des in der Zubereitung enthaltenen Wassers, wodurch die Verfestigungsdauer unzweckmäßig erhöht wird.

Neben den als weitere Comonomere in Betracht kommenden Monomeren III, können am Aufbau der Komponente A) in untergeordneten Mengen, 0 bis 3 Gew.-%, zusätzlich sonstige copolymerisierbare Monomere wie Vinylsulfonsäure, bzw. dessen wasserlösliche Salze wie Natriumvinylsulfonat oder N-Vinyl-2-pyrrolidon beteiligt sein.

Geeignet sind Copolymerisate, die in Tetrahydrofuran einen K-Wert von 20 bis 100, bevorzugt 50 bis 80, aufweisen. Der K-Wert ist eine relative Viskositätszahl, die in Analogie zur DIN 53 726 bei 25°C bestimmt wird. Er enthält die Fließgeschwindigkeit einer Mischung aus 0,005 g Polymerisat pro ml Tetrahydrofuran (THF), relativ zur Fließgeschwindigkeit von reinem THF und charakterisiert den mittleren Polymerisationsgrad des Polymerisates. Von besonderem Interesse sind Copolymerisate, die 35 bis 45 Gew.-% Methylacrylat, 35 bis 45 Gew.-% Ethylacrylat, 4 bis 7 Gew.-% Acrylsäure und 4 bis 7 Gew.-%

Methacrylsäure einpolymerisiert enthalten.

Zur Herstellung der Komponente B werden mit Vorteil polymere Polycarbonsäuren eingesetzt, deren K-Wert in THF 8 bis 40, bevorzugt 10 bis 25 beträgt. Zum Aufbau dieser polymeren Polycarbonsäuren kommen aus der Reihe der Monomeren II besonders Acrylsäure, Methacrylsäure, Itakonsäure, Fumarsäure, Maleinsäure und Maleinsäureanhydrid in Betracht.

Als Comonomere V werden Styrol, Acrylnitril und die Acrylsäure- oder Methacrylsäureester von Methanol, Ethanol, iso-Propanol sowie n- und iso-Butanol bevorzugt. Von besonderem Interesse sind Copolymerisate, die bis 60 Gew.-% Acrylsäure und/oder Methacrylsäure sowie 65 bis 40 Gew.-% Styrol einpolymerisiert enthalten. Derartige Copolymerisate haben bevorzugt Säurezahlen von 210 bis 500 mg KOH/g. Sie können in an sich üblicher Weise als Substanz- oder Lösungspolymerisat hergestellt werden. Bevorzugt werden sie nach dem in der DE-OS 30 34 171 beschriebenen Verfahren hergestellt. Die Säurezahl gibt an, wieviel mg KOH benötigt werden, um die in 1 g Polymerisat enthaltenen Säurefunktionen zu neutralisieren.

Die Herstellung der erfindungsgemäßen Kunststoffzubereitungen erfolgt zweckmäßigerweise durch Mischen einer 30 bis 60 gew.-%igen wäßrigen Kunststoffdispersion, die die Komponente A als disperse Phase enthält, und einer Ammoniak enthaltenden 20 bis 60 gew.-%igen wäßrigen Lösung der Komponente B, wobei vorzugsweise die Lösung des polymeren Salzes unter Rühren in die Dispersion gebracht wird.

Die Herstellung der wäßrigen, ammoniakalischen Lösung des polymeren Salzes B wird zweckmäßigerweise so ausgeführt, daß man die polymere Polycarbonsäure in Ammoniak enthaltendem Wasser löst und anschließend bei Temperaturen zwischen 10 und 90°C, gegebenenfalls unter Druck, in diese Lösung pro Mol nichtveresterter Säurefunktionen 0,2 bis 0,5, bevorzugt 0,3 bis 0,45 mol $Zn^{2+}$ einrührt. Als Zinkverbindung kommt neben Zinkcarbonat und Zinkhydroxid insbesondere Zinkoxid in Betracht.

Nach beendeter Auflösung der Zinkverbindung kann der Ammoniakgeruch gemindert werden, indem man einen Teil des Ammoniaks z.B. durch Entspannen des Reaktors bei hoher Temperatur oder durch Ausblasen der Lösung mit Wasserdampf entfernt. Bevorzugt wird ein molares Verhältnis von Ammoniak zu Zink von 6:1 bis 2:1 eingestellt.

Die eingesetzten Kunstharzdispersionen (A) sind zum Teil im Handel erhältlich oder nach dem an sich bekannten Verfahren der Emulsionspolymerisation zugänglich. Auf den Feststoffgehalt bezogen enthalten sie vorteilhaft 0,75 bis 5, vorzugsweise 1 bis 2,5 Gew.-% an ionischen und/oder nicht-ionischen Emulgatoren, die die Dispersionen gegen mehrwertige Ionen stabilisieren.

Als Emulgatoren werden bevorzugt ethoxylierte Fettalkohole oder Alkylphenole sowie die Alkalimetallsalze der zugehörigen Schwefelsäureester eingesetzt. Der Ethoxylierungsgrad liegt vorzugsweise zwischen 8 und 35 und der Alkylrest der Fettalkohole und Alkylphenole enthält vorteilhaft 8 bis 25 C-Atome.

Die erfindungsgemäßen Kunststoffzubereitungen sind insbesondere als Mehrzweckkleber verwendbar, mit denen sich die unterschiedlichsten Materialien wie Papier, Keramik, Glas, Holz, Kunststoffe oder Metalle verkleben lassen.

Neben Transparenz, Lösungsmittelfreiheit und hoher Wasserfestigkeit der erzeugten Verklebungen, weisen die erfindungsgemäßen Kunststoffzubereitungen als weitere bemerkenswerte Eigenschaft eine relativ geringe Zähigkeit (0,2 bis 20 Pa·s bei 23°C) auf, obwohl ihr Feststoffgehalt mehr als 25 Gew.-% beträgt. Dies ermöglicht es, die Zubereitungen durch Spritzen, Streichen, Rollen oder Tauchen auf die zu verklebenden Oberflächen zu bringen.

Beispiele 1 - 5

In üblicher Weise hergestellte, die Copolymeren A enthaltende wäßrige Polymerdispersionen wurden mit einer Ammoniak enthaltenden wäßrigen Lösung eines Zinksalzes der Polymeren B, das pro Mol nicht veresterter Säurefunktionen 0,45 mol $Zn^{2+}$ enthielt, versetzt. Die so erhaltenen Zubereitungen B1 bis B5 wiesen die in Tabelle 1 angegebenen Zusammensetzungen und Eigenschaften auf.

Tabelle 1

| Eigenschaften | Beispiele | | | | |
|---|---|---|---|---|---|
| | B1 | B2 | B3 | B4 | B5 (Vergleich) |
| Copolymeres A, (Gew.-%) | 32,1 | 26,6 | 26,6 | 27,0 | 29,0 |
| zusammengesetzt aus Gew.-%: | | | | | |
| Methylacrylat | 35 | 45 | 35 | - | 35 |
| Ethylacrylat | 35 | 45 | 35 | 80 | 35 |
| Butylacrylat | 20 | - | 20 | - | 27 |
| Methylmethacrylat | - | - | - | 7 | - |
| Acrylsäure | 5 | 5 | 5 | - | 3 |
| Methylacrylsäure | 4,75 | 5 | 5 | 13 | - |
| Natriumvinylsulfat | 0,25 | - | - | - | - |
| K-Wert von A (in THF) | 61,2 | 64,6 | 71,3 | 76,9 | 72,1 |
| Zinksalz B (Gew.-%) | 2,9 | 4,0 | 5,2 | 6,5 | 2,5 |
| Polycarbonsäure aus Gew.-%: | | | | | |
| Acrylsäure | 50 | 50 | 50 | 50 | 50 |
| Styrol | 50 | 50 | 50 | 50 | 50 |
| K-Wert der Polycarbonsäure (in THF) | 12 | 12 | 12 | 12 | 12 |
| Ammoniak (Gew.-%) | 0,5 | 1,4 | 2,0 | 1,3 | 0,4 |
| Wasser (Gew.-%) | 64,5 | 68,0 | 66,2 | 64,2 | 68,1 |
| Emulgatoren: | | | | | |
| (Gew.-% bezogen auf A) | | | | | |
| Natriumlaurylsulfat | 1 | 1 | - | - | 1 |
| Gemisch aus Na-Salzen von Ethoxyalkansulfonsäuren (Alkylrest $C_{12}$-$C_{14}$, EO-Grad: 2,5) | - | - | 1 | 1 | - |
| pH-Wert | 7,8 | 7,6 | 8,0 | 8,1 | 8,0 |

Beispiel 6

Bestimmung der Lichtdurchlässigkeit (LD) der Zubereitungen B1-B5

Gemessen wurde mit einem handelsüblichen Photometer relativ zu Wasser, dem ein LD-Wert von 100 zugeordnet wurde. Die Schichtdicke betrug 20 mm. Die Ergebnisse sind in Tabelle 2 zusammengestellt.

Tabelle 2

| | Beispiele | | | | |
|---|---|---|---|---|---|
| | B1 | B2 | B3 | B4 | B5 (Vergleich) |
| LD-Wert | 66 | 62 | 60 | 53 | 0 |

Beispiel 7

Bestimmung der Klebfestigkeit verschiedener Verklebungen mit den Zubereitungen B1-B4

Zur Bestimmung der Klebfestigkeit verschiedener Klebungen wurden Probeplatten (20 • 20 mm) aus Buchenholz (BH), Aluminium (AL), Blech (BL), Polyvinylchlorid (PVC) und Polystyrol (PS) in ein auf einem Block aus Buchenholz befindliches nasses Kleberbett so eingelegt, daß eine homogene Verklebungsfläche (20 • 20 mm) entstand, die in allen Fällen pro m² Verklebungsfläche 50 g Klebstoff (wasserfrei) enthielt.

Nach 1-tägigem Trocknen bei 23°C und 50 % relativer Luftfeuchtigkeit wurde mit einer Zugprüfmaschine bei einer Prüfkraftzunahme von 10 kN/min die Höchstkraft-Belastung (Höchstkraft in N/geklebte Prüffläche in mm²) bestimmt, der die verschiedenen Verklebungen standhielten. Die Ergebnisse sind in Tabelle 3 zusammengestellt.

Tabelle 3

|  | Höchstkraft-Belastung (N/mm²) | | | | |
|---|---|---|---|---|---|
|  | BH/BH | BH/AL | BH/BL | BH/PVC | BH/PS |
| B 1 | 5,4 | 5,4 | 5,5 | 3,3 | 2,8 |
| B 2 | 7,0 | 5,6 | 4,8 | 3,5 | 3,3 |
| B 3 | 5,2 | 5,8 | 4,5 | 4,1 | 3,2 |
| B 4 | 5,1 | 4,1 | 4,1 | 2,6 | 2,4 |

## Ansprüche

1. Wäßrige Kunststoffzubereitungen, im wesentlichen enthaltend

A) 25 bis 55 Gew.-% Kunststoffteilchen, die in Tetrahydrofuran einen K-Wert von 20 bis 100 aufweisen und aus

a) 65 bis 92 Gew.-% eines Acrylsäure- oder Methacrylsäureesters eines $C_1$-$C_8$-Alkanols oder eines Gemisches dieser Monomeren (Monomere I)

b) 6 bis 15 Gew.-% einer 3 bis 5 C-Atome enthaltenden $\alpha,\beta$-monoethylenisch ungesättigten Monocarbonsäure, Dicarbonsäure und/oder eines Dicarbonsäureanhydrids (Monomere II)

c) 0 bis 20 Gew.-% Vinylacetat und/oder Vinylpropionat (Monomere III) und

d) 0 bis 3 Gew.-% sonstigen copolymerisierbaren Monomeren (Monomere IV)

aufgebaut sind,

B) 2 bis 10 Gew.-% eines Zinksalzes einer polymeren Polycarbonsäure, die in Tetrahydrofuran einen K-Wert von 2 bis 40 hat und aus

a) 20 bis 100 Gew.-% der Monomeren II,

b) 0 bis 80 Gew.-% Acrylnitril, Styrol, eines Acrylsäure- oder Methacrylsäureesters eines $C_1$-$C_8$-Alkanols oder eines Gemisches dieser Monomeren (Monomere V) und

c) 0 bis 3 Gew.-% der Monomeren IV

aufgebaut ist, wobei das Salz pro Mol nicht veresterter Säurefunktionen 0,2 bis 0,5 mol $Zn^{2+}$ enthält,

C) 0,3 bis 6 Gew.-% Ammoniak,

D) wirksame Mengen eines Emulgators, und

E) als Restmenge Wasser.

2. Kunststoffzubereitungen nach Anspruch 1, enthaltend als Komponente A ein Copolymerisat aus 35 bis 45 Gew.-% Methylacrylat, 35 bis 45 Gew.-% Ethylacrylat, 4 bis 7 Gew.-% Acrylsäure und 4 bis 7 Gew.-% Methacrylsäure.

3. Kunststoffzubereitungen nach den Ansprüchen 1 oder 2, enthaltend als Komponente B das Zinksalz einer polymeren Polycarbonsäure, die 35 bis 60 Gew.-% Acrylsäure und/oder Methacrylsäure, sowie 65 bis 40 Gew.-% Styrol einpolymerisiert enthält.

4. Verfahren zur Herstellung der Kunststoffzubereitungen gemäß den Ansprüchen 1 bis 3, dadurch gekennzeichnet, daß in eine 40 bis gew.-%ige wäßrige Kunststoffdispersion, die die Komponente A als disperse Phase enthält, eine Ammoniak enthaltende 20 bis 60 gew.-%ige wäßrige Lösung der Komponente B eingerührt wird.

5. Verwendung der Kunststoffzubereitungen gemäß den Ansprüchen 1 bis 3 als Mehrzweckklebstoffe.